# EUROPÄISCHE PATENTSCHRIFT

(11) **EP 3 380 390 B1**
(45) Veröffentlichungstag und Bekanntmachung des Hinweises auf die Patenterteilung: **01.01.2020**
(21) Anmeldenummer: 16798147.1
(22) Anmeldetag: 17.11.2016
(51) Int. Cl.: B62D 5/00

(54) **FEEDBACKAKTUATOR FÜR EINE STEER-BY-WIRE-LENKUNG**
FEEDBACK ACTUATOR FOR A STEER-BY-WIRE STEERING MECHANISM
ACTIONNEUR À RÉTROACTION POUR UNE DIRECTION À COMMANDE ÉLECTRIQUE « STEER-BY-WIRE »

(30) Priorität: 25.11.2015 DE 102015015147
(43) Veröffentlichungstag der Anmeldung: 03.10.2018
(73) Patentinhaber: ThyssenKrupp Presta AG, 9492 Eschen (LI); thyssenkrupp AG, 45143 Essen (DE)
(72) Erfinder: DELMARCO, Claudio, 6800 Feldkirch (AT); BRANDL, Felix, 6850 Dornbirn (AT); VIRZI, Claudio, 9400 Rohrschach (CH)
(74) Vertreter: thyssenkrupp Intellectual Property GmbH
(86) Internationale Anmeldenummer: PCT/EP2016/077977
(87) Internationale Veröffentlichungsnummer: WO 2017/089218

(56) Entgegenhaltungen:
- DE-C1- 19 539 101
- FR-A1- 2 887 840
- FR-A1- 2 911 105
- JP-A- 2003 200 843
- JP-A- 2004 314 735
- JP-A- 2004 314 736

## Beschreibung

Die vorliegende Erfindung betrifft einen Feedback-Aktuator für ein Lenksystem mit den Merkmalen des Oberbegriffs des Anspruchs 1 und eine Steer-by-Wire-Lenkung mit den Merkmalen des Oberbegriffs des Anspruchs 11.

Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen, sodass nach Betätigung des Lenkrads eine Kraft-Rückmeldung fehlt, z. B. eine entsprechende Rückmeldung beim Parken, wo aus Komfortgründen ein geringer Kraftaufwand gewünscht ist, oder bei einer üblichen Fahrt, bei der ein der Fahrzeugreaktion entsprechendes höheres Lenkmoment gewünscht ist. Um bei Steer-by-Wire-Lenkungen die Rückmeldungen der Straße auf das Lenkrad zu simulieren, ist es notwendig am Lenkrad bzw. der Lenksäule einen Feedback-Aktuator vorzusehen, welcher in Abhängigkeit der Rückwirkungen der Lenkhandhabe ein Lenkgefühl aufprägt. Dieser Feedback-Aktuator besteht in der Regel aus einem Elektromotor, der über ein Untersetzungsgetriebe auf die Lenksäule wirkt. Nachteilig an diesen Lenkradaktuatoren ist, dass ihre Herstellung mit hohen Kosten verbunden ist und der Platzbedarf im Bereich der Lenksäule erheblich ist.

Die DE 195 39 101 C1 offenbart eine Rückwirkungssimulation, bei der ein Rückstellmoment auf das Lenkrad bzw. die Lenkwelle ausgeübt wird. Dabei ist eine Rückstellfederanordnung vorgesehen, die ein Rückstellmoment auf das Lenkrad ausübt. Der gewünschte Verlauf des Rückstellmomentes in Abhängigkeit vom Lenkwinkel wird durch einen Elektromotor erzeugt. Ein Nachteil dieser Lösung ist, dass der Motor aufgrund der geforderten hohen Rückstellmomente entsprechend groß dimensioniert werden muss.

Aus der JP 2004 314736 A oder der JP 2003 200843 A sind Feedback-Aktuatoren mit einem vorgespannten Kurbeltrieb bekannt, bei denen ein Federelement über einen Kurbeltrieb an der Lenkwelle angreift. Das in die Lenkwelle eingeleitete Gegenmoment kann dabei jedoch nur unzureichend an reale Fahrsituationen angepasst werden.

Der Erfindung liegt die Aufgabe zugrunde, einen verbesserten Feedback-Aktuator für eine Lenkeinrichtung für Kraftfahrzeuge bereitzustellen, der eine bessere Anpassung des Gegenmoments ermöglicht.

Diese Aufgabe wird von einem Feedback-Aktuator mit den Merkmalen des Anspruchs 1 und einer Steer-by-Wire Lenkung mit den Merkmalen des Anspruchs 9 gelöst. Vorteilhafte Weiterbildungen der Erfindung können den Unteransprüchen entnommen werden.

Demnach ist ein Feedback-Aktuator für eine Lenkeinrichtung für mit einem auf die gelenkten Räder wirkenden, in Abhängigkeit des Fahrerlenkwunsches elektronisch geregelten Lenksteller ausgestattete Kraftfahrzeuge vorgesehen, wobei der Feedback-Aktuator über eine Lenkwelle die Rückwirkungen der Straße auf ein Lenkrad überträgt, wobei der Feedback-Aktuator als drehmomenterzeugende Mittel einen vorgespannten Kurbeltrieb und einen Elektromotor aufweist, wobei der Kurbeltrieb ein Kniehebelgestänge mit wenigstens einem auf ein Federelement wirkendes Druckstück aufweist, wobei das Kniehebelgestänge symmetrisch zur Kurbelwelle mit wenigstens zwei Kniegelenken ausgebildet ist, wobei am kurbelwellenfernen Ende eines jeden Hebelarmes ein auf ein Federelement wirkendes Druckstück angeordnet ist.

Der Kurbeltrieb ist vorteilhafterweise so ausgebildet, dass in einer neutralen Lage der Lenkwelle und des Kurbeltriebs beide Kniegelenke gleichermaßen gebeugt sind. Das hat den Vorteil, dass in beide Lenkrichtungen das von dem Kurbel-trieb auf die Lenkwelle eingeleitete Drehmoment gleich ist. Als gleichermaßen gebeugte Kniegelenke kann vorteilhafterweise die Anordnung der gebeugten Kniegelenke in einem gleichen Winkel zur Kurbelwelle verstanden werden. Die Hebelarme sind dabei so miteinander verbunden, dass bei einer Drehung der Lenkwelle bevorzugt das eine Kniegelenk gebeugt und das andere Kniegelenk gestreckt wird.

Durch das Vorhandensein des vorgespannten Kurbeltriebs kann der Elektromotor deutlich kleiner ausgestaltet werden. Das spart Bauraum, Gewicht und Kosten.

Vorteilhaft wird der erfindungsgemäße Feedback-Aktuator in einem Steer-by-Wire Lenksystem eingesetzt. Weiter ist es denkbar und möglich, einen derartigen Feedback-Aktuator bei klassischen Lenksystemen, wie einer elektromechanischen Servolenkung, einzusetzen. Vorzugsweise wird das vom Feedback-Aktuator gebildete Drehmoment zur Simulation der Rückwirkungen der Straße als Summe eines von dem vorgespannten Kurbeltrieb auf die Lenkwelle aufgebrachten Drehmoments und eines von dem Elektromotor auf die Lenkwelle aufgebrachten Drehmoments gebildet.

Es ist vorteilhaft, wenn der vorgespannte Kurbeltrieb eine mittels eines Untersetzungsgetriebes mit der Lenkwelle drehfest verbundene Kurbelwelle aufweist. Bevorzugt weist der Kurbeltrieb ein Kniehebelgestänge mit wenigstens einem auf ein Federelement wirkendes Druckstück auf.

Weiterhin bevorzugt ist das Kniehebelgestänge symmetrisch, insbesondere achsensymmetrisch, zur Kurbelwelle mit wenigstens zwei Kniegelenken ausgebildet, wobei am kurbelwellenfernen Ende eines jeden Hebelarmes ein auf ein Federelement wirkendes Druckstück angeordnet ist.

In einer bevorzugten Ausführungsform sind insgesamt zwei Hebelarme vorgesehen und das Federelement ist durch eine Tellerfedersäule gebildet.

Ein bei Drehung der Lenkwelle von dem vorgespannten Kurbeltrieb erzeugtes degressiv ansteigendes Gegendrehmoment kann von dem auf die Lenkwelle wirkenden Elektromotor angepasst werden. Dabei ist es vorteilhaft, wenn die Anpassung fahrzeuggeschwindigkeitsabhängig erfolgt.

Bevorzugt ist bei Drehung der Lenkwelle ein von dem Kurbeltrieb erzeugtes degressiv ansteigendes Gegendrehmoment von dem auf die Lenkwelle wirkenden Elektromotor anpassbar. Dabei erfolgt die Anpassung vorzugweise fahrzeug- und lenkgeschwindigkeitsabhängig.

Weiterhin ist ein Steer-by-Wire-Lenksystem für ein Feedback-Aktuator vorgesehen, der ein mit einer Lenkwelle verbundenes Lenkrad des Lenksystems mit einer eine Kopplung zwischen Lenkrad und einem Lenkgetriebe simulierenden Kraft beaufschlagt, wobei der Feedback-Aktuator als drehmomenterzeugendes Mittel einen vorgespannten Kurbeltrieb und einen Elektromotor aufweist.

Nachfolgend wird ein Ausführungsbeispiel der Erfindung anhand der Zeichnungen näher beschrieben. Gleiche oder funktionsgleiche Bauteile sind in allen Zeichnungen mit den gleichen Bezugsziffern versehen.

Es zeigen:
- Fig. 1:: eine schematische Darstellung einer Steer-by-Wire-Kraftfahrzeuglenkung,
- Fig. 2:: eine räumliche Darstellung eines Lenkrads mit Lenkwelle, Reibelement, Elektromotor und Feedback-Aktuator,
- Fig. 3:: eine vergrößerte räumliche Ansicht eines Kurbeltriebs des Feedback-Aktuators,
- Fig. 4:: eine weitere räumliche Darstellung des Kurbeltriebs aus Fig. 3 in Neutralstellung,
- Fig. 5:: eine räumliche Ansicht des Kurbeltriebs aus Fig. 3 in einer eingeschlagenen Stellung des Lenkrads, sowie
- Fig. 6:: eine Lenkmomentkurve des Kurbeltriebs.

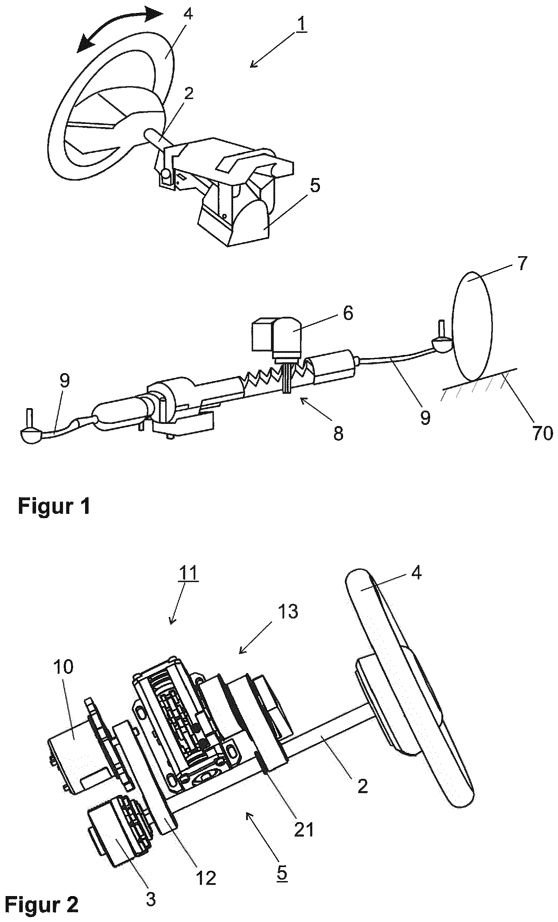

In der Figur 1 ist eine Steer-by-Wire-Lenkung 1 gezeigt. An einer Lenkwelle 2 ist ein nicht dargestellter Drehwinkelsensor angebracht, welcher das durch Drehen des Lenkrads 4 aufgebrachte Handmoment erfasst. Des Weiteren ist an der Lenkwelle 2 ein Feedback-Aktuator 5 angebracht, welcher dazu dient, die Rückwirkungen von der Fahrbahn auf das Lenkrad 4 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an ein Steuergerät übertragen. Das Steuergerät steuert in Abhängigkeit des Signals vom Drehwinkelsensor sowie weiteren Eingangsgrößen, wie z. B. Fahrzeuggeschwindigkeit, Gierrate und dergleichen einen elektrischen Lenksteller 6 an, welcher die Stellung der gelenkten Räder 7 steuert. Der Lenksteller 6 wirkt über ein Lenkgetriebe 8 sowie eine Spurstange 9 und anderen Bauteilen mittelbar auf die gelenkten Räder 7.

Figur 2 zeigt einen erfindungsgemäßen Feedback-Aktuator 5 mit Elektromotor 10 und Kurbeltrieb 11. Das Lenkrad 4 ist drehfest mit der Lenkwelle 2 verbunden. Am Ende der Lenkwelle 2 ist ein einstellbares Reib-bzw. Dämpfungselement 3 angeordnet, das in Abhängigkeit der Fahrzeug-und Lenkwinkelgeschwindigkeit und der Lenkrichtung das aufgebrachte Handmoment überlagert, um dem Fahrer ein möglichst natürliches Lenkgefühl zu übertragen. Der Elektromotor 10 ist mit der Lenkwelle 2 über einen Riementrieb 12 verbunden. Der Kurbeltrieb 11 weist eine mittels eines Zahnriemengetriebes 13 mit der Lenkwelle 2 verbundene Kurbelwelle 14 auf.

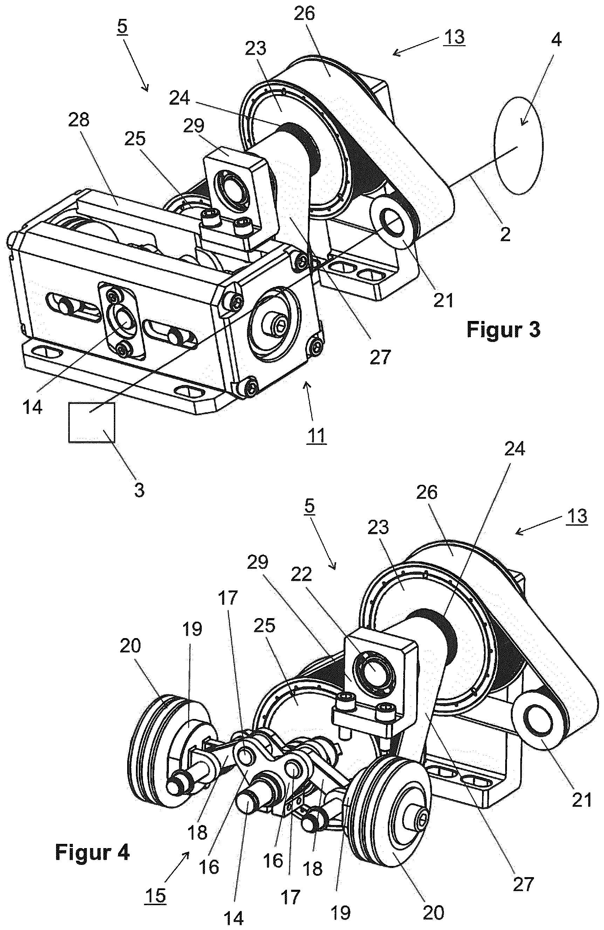

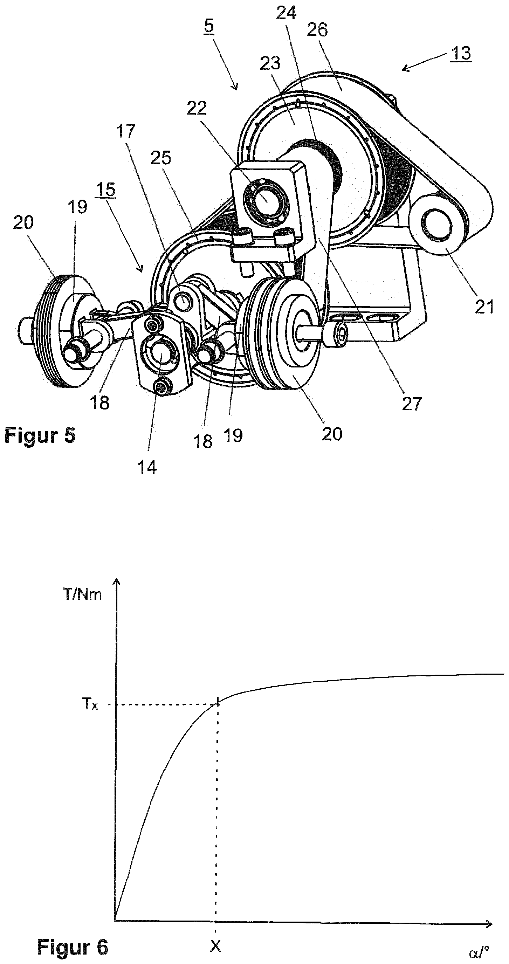

In den Figuren 3, 4 und 5 ist der Kurbeltrieb 11 im Detail dargestellt. Figur 4 zeigt die Geradeausstellung der Lenkung, die sogenannte Nullstellung. In der Figur 5 ist das Lenkrad 4 hingegen ausgelenkt und die Räder 7 eingeschlagen.

Mit der Kurbelwelle 14 drehfest verbunden ist ein Kniehebelgestänge 15, das zwei Hebelarme 16 aufweist, die jeweils ein Kniegelenk 17 aufweisen und an ihrem kurbelwellenfernen Ende 18 mit einem daran drehbar gelagerten Druckstück 19 verbunden sind. Die Druckstücke 19 wirken jeweils senkrecht auf eine Tellerfedersäule 20. Das Kniehebelgestänge 15 ist symmetrisch zur Kurbelwellenachse ausgeführt und in einem Gehäuse 28 angeordnet. Die Druckstücke 19 und Tellfedern 20 liegen in einer Ebene senkrecht zur Kurbelwellenachse. Die an der Kurbelwelle 14 drehbar gelagerten Ende der Hebelarme 16 sind fest miteinander verbunden. Das Zahnriemengetriebe 13 weist eine mit der Lenkwelle 2 fest verbundene Riemenscheibe 21, eine Zwischenwelle 22 mit zwei drehfest verbunden Riemenscheiben 23, 24, sowie eine mit der Kurbelwelle 14 fest verbundene Riemenscheibe 25 und zwei Zahnriemen 26, 27 auf. Die Größen der Riemenscheiben 21, 23, 24, 25 sind so gewählt, dass das Zahnriemengetriebe 13 eine gewünschte Untersetzung aufweist. An der Zwischenwelle 22 knüpft eine Befestigung 29 für das Gehäuse 28, in dem das Kniehebelgestänge 15 angeordnet ist.

Um dem Fahrer bis zu einem bestimmten Lenkwinkel (z. B. 120°) einen immer stärkeren Widerstand bzw. ein Lenkmoment zu übertragen, wird ein vom Fahrer eingeleiteter Drehwinkel über das Lenkrad 4 an die Lenkwelle 2 und anschließend über das Zahnriemengetriebe 13 an den Kurbeltrieb 11 weitergeleitet. Dabei wird je nach Drehrichtung das eine Kniegelenk 17 gestreckt und das andere Kniegelenk 17 gebeugt, so dass das an dem gestreckten Kniegelenk 17 befestigte Druckstück 19 in Richtung der Tellerfedersäule 20 bewegt wird und diese gegen das Gehäuse 28 zusammendrückt. Die Tellerfedersäule 20, bestehend aus einer Vielzahl von Tellerfedern, erzeugt beim Zusammendrücken eine degressiv ansteigende Gegenkraft, welche über den Kurbelhebel 18, 16 auf die Welle 14 im Kurbelbetrieb übertragen wird und ein winkelabhängiges Drehmoment, das proportional zur Länge des Kurbelhebelarms ist, ergibt. Die Hubbewegung in Richtung der Achse der Tellerfedersäule hat einen sinusförmigen Verlauf (Winkel- und Wegabhängigkeit), diese überlagert mit der degressiven Kennlinie der Tellerfedern ergibt eine typische Moment-Kennlinie, die ein ansprechendes Lenkgefühl simuliert. Ein Beispiel für eine degressive Lenkradmomentkurve bzw. Handmomentkurve des Kurbeltriebs 11 von T über α ist in Figur 6 dargestellt. Die Kurve steigt zunächst bis zu einem Lenkradwinkel X steil bis zum Handmoment Tx an und erreicht anschließend annährend eine Sättigung.

Durch den Elektromotor 10, der an die Lenkwelle 2 gekoppelt ist, kann die von den Tellerfedern 20 erzeugte Handmomentkurve geschwindigkeitsabhängig erhöht oder verringert werden. Dieses Moment wird in Abhängigkeit der von der Fahrbahn auf die Straßenränder übertragenen Seitenführungskraft verstärkt oder verringert. Der Elektromotor 10 kann an der Lenkwelle 2 oder der Kurbelwelle 14 angreifen.

Der erfindungsgemäße Feedback-Aktuator erzeugt eine Handmomentkurve für den Fahr- und Parkbetrieb eines Fahrzeuges. Um eine stark ansteigende und degressive Momentkurve zu erreichen, wird das Prinzip eines Kurbeltriebs bzw. Kniehebels ausgenutzt. Zusätzlich wird eine Tellerfernsäule zur Krafterzeugung verwendet. An der Kurbelwelle wird somit ein Moment durch die Tangentialkraft aufgebaut, welches zusätzlich mit den Eigenschaften der Tellerfedern einen degressiven Verlauf der Momentkurve ergibt.

Die geschwindigkeitsabhängige Anpassung der Handmomentkurve erfolgt durch den Elektromotor, welcher in der Lenkachse mit entsprechender Übersetzung eingreift. Durch die mechanischen Komponenten kann der Elektromotor deutlich kleiner ausgelegt werden, was Kosten und Gewicht einspart. Die Grundreibung im System und die Handmomentkurve für den Parkbetrieb werden über ein einstellbares Reibelement im Lenkstrang dargestellt.

## Patentansprüche

1. Feedback-Aktuator (5) für eine Lenkeinrichtung (1) für mit einem auf die gelenkten Räder (7) wirkenden, in Abhängigkeit des Fahrerlenkwunsches elektronisch geregelten Lenksteller (6) versehene Kraftfahrzeuge, wobei der Feedback-Aktuator (5) über eine Lenkwelle (2) die Rückwirkungen der Straße (70) auf ein Lenkrad (4) überträgt, wobei der Feedback-Aktuator (5) als drehmomenterzeugende Mittel einen vorgespannten Kurbeltrieb (11) und einen Elektromotor (10) aufweist, **dadurch gekennzeichnet, dass** der Kurbeltrieb (11) ein Kniehebelgestänge (15) mit wenigstens einem auf ein Federelement wirkendes Druckstück (19) aufweist, wobei das Kniehebelgestänge (15) symmetrisch zur Kurbelwelle (14) mit wenigstens zwei Kniegelenken (17) ausgebildet ist, wobei am kurbelwellenfernen Ende (18) eines jeden Hebelarmes (16) ein auf ein Federelement (20) wirkendes Druckstück (19) angeordnet ist.

2. Feedback-Aktuator (5) nach Anspruch 1, **dadurch gekennzeichnet, dass** der Feedback-Aktuator (5) ein Drehmoment zur Simulation der Rückwirkungen der Straße (70) erzeugt, das durch die Summe eines von dem vorgespannten Kurbeltrieb auf die Lenkwelle (2) aufgebrachten Drehmoments und eines von dem Elektromotor (10) auf die Lenkwelle (2) aufgebrachten Drehmoments gebildet ist.

3. Feedback-Aktuator (5) nach Anspruch 1 oder 2, **dadurch gekennzeichnet,** der vorgespannte Kurbeltrieb (11) eine mittels eines Untersetzungsgetriebes (13) mit der Lenkwelle (2) drehfest verbundene Kurbelwelle (14) aufweist.

4. Feedback-Aktuator (5) nach Anspruch 1, **dadurch gekennzeichnet, dass** insgesamt zwei Hebelarme (16) vorgesehen sind und das Federelement (20) durch eine Tellerfedersäule gebildet ist.

5. Feedback-Aktuator (5) nach Anspruch 1, **dadurch gekenn-zeichnet,** dass in einer neutralen Lage der Lenkwelle (2) und des Kurbeltriebs (11) beide Kniegelenke (17) gleichermaßen gebeugt sind.

6. Feedback-Aktuator (5) nach einem der Ansprüche 1 bis 5, **dadurch gekennzeichnet, dass** die Hebelarme (16) so miteinander verbunden sind, dass bei einer Drehung der Lenkwelle (2) das eine Kniegelenk (17) gebeugt und das andere Kniegelenk (17) gestreckt wird.

7. Feedback-Aktuator (5) nach einem der vorhergehenden Ansprüche, **dadurch gekennzeichnet, dass** bei Drehung der Lenkwelle (2) ein von dem vorgespannten Kurbeltrieb (11) erzeugtes degressiv ansteigendes Gegendrehmoment von dem auf die Lenkwelle (2) wirkenden Elektromotor (10) anpassbar ist.

8. Feedback-Aktuator (5) nach Anspruch 7, **dadurch gekennzeichnet, dass** die Anpassung fahrzeuggeschwindigkeitsabhängig ist.

9. Steer-by-Wire Lenkvorrichtung (1) für Kraftfahrzeuge mit einem auf die gelenkten Räder (7) wirkenden, in Abhängigkeit des Fahrerlenkwunsches elektronisch geregelten Lenksteller (6) und einem Feedback-Aktuator (5), welcher über eine Lenkwelle (2) die Rückwirkungen der Straße (70) auf ein Lenkrad (4) überträgt, **dadurch gekennzeichnet, dass** der Feedback-Aktuator (5) nach einem der Ansprüche 1 bis 8 ausgebildet ist.

## Claims

1. Feedback actuator (5) for a steering mechanism (1) for motor vehicles provided with a steering adjuster (6) which acts on the steered wheels (7) and is controlled electronically in accordance with the driver's steering command, wherein the feedback actuator (5) transmits the feedback from the road (70) to a steering wheel (4) via a steering shaft (2) wherein the feedback actuator (5) comprises a preloaded crank drive (11) and an electric motor (10) as a torque-generating means, **characterized in that** the crank drive (11) comprises a toggle-lever linkage (15) with at least one pressure piece (19) acting on a spring element, wherein the toggle-lever linkage (15) is symmetrical to the crankshaft (14) with at least two pin joints (17), wherein a pressure piece (19) acting on a spring element (20) is arranged on the end (18) of each lever arm (16) spaced away from the crankshaft.

2. Feedback actuator (5) according to Claim 1, **characterized in that** the feedback actuator (5) produces a torque to simulate the feedback from the road (70), which is formed by the sum of a torque from the preloaded crank drive applied onto the steering shaft (2) and a torque from the electric motor (10) applied onto the steering shaft (2).

3. Feedback actuator (5) according to Claim 1 or 2, **characterized in that** the preloaded crank drive (11) comprises a crankshaft (14), which is connected to the steering shaft (2) in a torque-proof manner by means of a reduction gear (13).

4. Feedback actuator (5) according to Claim 1, **characterized in that** a total of two lever arms (16) are provided and the spring element (20) is formed by a disk spring column.

5. Feedback actuator (5) according to Claim 1, **characterized in that,** in a neutral position of the steering shaft (2) and of the crank drive (11), both pin joints (17) are identically bent.

6. Feedback actuator (5) according to one of Claims 1 to 5, **characterized in that** the lever arms (16) are connected to each other in such a way that, when rotating the steering shaft (2), the one pin joint (17) is bent and the other pin joint (17) is unbent.

7. Feedback actuator (5) according to any one of the preceding claims, **characterized in that,** when rotating the steering shaft (2), a degressively increasing counter-torque generated by the preloaded crank drive (11) can be adjusted by the electric motor (10) acting on the steering shaft (2) .

8. Feedback actuator (5) according to Claim 7, **characterized in that** the adjustment depends on the speed of the motor vehicle.

9. Steer-by-wire steering apparatus (1) for motor vehicles with a steering adjuster (6), which acts on the steered wheels (7) and is controlled electronically in accordance with the driver's steering command, and a feedback actuator (5), which transmits the feedback from the road (70) to a steering wheel (4) via a steering shaft (2) **characterized in that** the feedback actuator (5) is designed according to one of Claims 1 to 8.

## Revendications

1. Actionneur à rétroaction (5) pour un dispositif de direction (1) pour des véhicules automobiles munis d'un actionneur de direction (6) agissant sur les roues dirigées (7) et régulé électroniquement en fonction d'un souhait de direction du conducteur, dans lequel l'actionneur à rétroaction (5) transmet par un arbre de direction (2) les effets de la route (70) à un volant de direction (4), dans lequel l'actionneur à rétroaction (5) présente comme moyen de production de couple un mécanisme à manivelle précontraint (11) et un moteur électrique (10), **caractérisé en ce que** le mécanisme à manivelle (11) présente une timonerie à levier articulé (15) avec au moins une pièce de pression (19) agissant sur un élément de ressort, dans lequel la timonerie à levier articulé (15) est formée de façon symétrique par rapport au vilebrequin (14) avec au moins deux genouillères (17), dans lequel une pièce de pression (19) agissant sur un élément de ressort (20) est disposée à l'extrémité (18) éloignée du vilebrequin de chaque bras de levier (16).

2. Actionneur à rétroaction (5) selon la revendication 1, **caractérisé en ce que** l'actionneur à rétroaction (5) produit un couple pour la simulation des effets de la route (70), qui est formé par la somme d'un couple appliqué à l'arbre de direction (2) par le mécanisme à manivelle précontraint et d'un couple appliqué à l'arbre de direction (2) par le moteur électrique (10).

3. Actionneur à rétroaction (5) selon une revendication 1 ou 2, **caractérisé en ce que** le mécanisme à manivelle précontraint (11) présente un vilebrequin (14) relié de façon calée en rotation à l'arbre de direction (2) au moyen d'un engrenage réducteur (13).

4. Actionneur à rétroaction (5) selon la revendication 1, **caractérisé en ce qu'**il est prévu au total deux bras de levier (16) et l'élément de ressort (20) est formé par une colonne de rondelles élastiques.

5. Actionneur à rétroaction (5) selon la revendication 1, **caractérisé en ce que** les deux genouillères (17) sont identiquement courbées dans une position neutre de l'arbre de direction (2) et du mécanisme à manivelle (11) .

6. Actionneur à rétroaction (5) selon l'une quelconque des revendications 1 à 5, **caractérisé en ce que** les bras de levier (16) sont reliés l'un à l'autre, de telle manière que lors d'une rotation de l'arbre de direction (2) une genouillère (17) soit courbée et que l'autre genouillère (17) soit étendue.

7. Actionneur à rétroaction (5) selon l'une quelconque des revendications précédentes, **caractérisé en ce que** lors de la rotation de l'arbre de direction (2) un couple antagoniste croissant de façon dégressive produit par le mécanisme à manivelle précontraint (11) puisse être adapté par le moteur électrique (10) agissant sur l'arbre de direction (2) .

8. Actionneur à rétroaction (5) selon la revendication 7, **caractérisé en ce que** l'adaptation dépend de la vitesse du véhicule.

9. Dispositif de direction à commande électrique Steer-by-Wire (1) pour des véhicules automobiles avec un actionneur de direction (6) agissant sur les roues dirigées (7) et régulé électroniquement en fonction du souhait de direction du conducteur et avec un actionneur à rétroaction (5), qui transmet par un arbre de direction (2) les effets de la route (70) à un volant de direction (4), **caractérisé en ce que** l'actionneur à rétroaction (5) est réalisé selon l'une quelconque des revendications 1 à 8.
